# EUROPEAN PATENT SPECIFICATION

(11) **EP 3 073 201 B1**
(45) Date of publication and mention of the grant of the patent: **15.12.2021**
(21) Application number: 16162039.8
(22) Date of filing: 23.03.2016
(51) Int. Cl.: F24F 1/22

(54) **AIR CONDITIONER AND METHOD OF CONTROLLING THE SAME**
KLIMAANLAGE UND VERFAHREN ZUR STEUERUNG DAVON
CLIMATISATION ET PROCÉDÉ DE COMMANDE CORRESPONDANT

(30) Priority: 24.03.2015 KR 20150040989
(43) Date of publication of application: 28.09.2016
(73) Proprietor: LG Electronics Inc., Seoul 07336 (KR)
(72) Inventor: PARK, Sangjun, 08592 Seoul (KR)
(74) Representative: Vossius & Partner Patentanwälte Rechtsanwälte mbB

(56) References cited:
- JP-A- S62 680
- JP-A- H11 287 497
- JP-A- 2004 003 854
- JP-A- 2007 198 665

## Description

### CROSS-REFERENCE TO RELATED APPLICATION

This application claims the priority benefit of Korean Patent Application No. 10-2015-0040989, filed on March 24, 2015 in the Korean Intellectual Property Office.

### BACKGROUND OF THE INVENTION

### 1.Field of the Invention

The present invention relates to an air conditioner and method of controlling the same, and more particularly, to an air conditioner that controls vibration caused by the operation of a compressor and a method of controlling the same.

### 2. Discussion of the Related Art

Air conditioners are installed to regulate the indoor temperature and purify the indoor air by blow cold or warm air to a room, with the aim of providing its occupants with a more comfortable environment. Typically, an air conditioner includes an indoor unit consisting of a heat exchanger and installed in a room, and an outdoor unit consisting of a compressor and a heat exchanger and supplying refrigerant to the indoor unit.

This air conditioner is controlled separately for the indoor unit consisting of the heat exchanger and the outdoor unit consisting of the compressor and the heat exchanger, and operates by controlling the power supply to the compressor or to the heat exchanger. Also, at least one indoor unit may be connected to the outdoor unit, and refrigerant is supplied to the indoor unit to run the air conditioner in cooling mode or heating mode depending on the type of operation the use wants to run.

The air conditioner runs a cooling or heating operation based on the flow of refrigerant. In the cooling operation, when a high-pressure, high-temperature liquid refrigerant is supplied to the indoor unit through the heat exchanger of the outdoor unit from the compressor of the outdoor unit, the refrigerant expands into a gas in the heat exchanger of the indoor unit, cooling the surrounding temperature and causing an indoor fan to rotate and blow cold air to the room. In the heating operation, when a high-temperature, high-pressure gaseous refrigerant is supplied to the indoor unit from the compressor of the outdoor unit, the refrigerant turns into a liquid in the heat exchanger of the indoor unit, and the air is warmed by the energy released from the refrigerant and blown to the room by the operation of the indoor fan.

Since the operating condition of the compressor is a major control factor for the air conditioner, it is important in the control of the air conditioner to detect a malfunction in the compressor or monitor the operating condition of the compressor.

The compressor operates at varying operating frequencies depending on the amount of load. When the compressor operates at a particular operating frequency, it may produce vibration and, in some cases, resonance. Such vibration can affect the operation of the compressor depending on the aging condition of the compressor and, what is worse, can cause damage to the compressor, especially when the air conditioner is operated for long hours.

Notably, a refrigerant inlet pipe and a refrigerant outlet pipe are connected to the compressor, in which case, vibration caused when the compressor operates at a particular operating frequency is transmitted to the compressor and all the way to the pipes connected to it, and this can cause a malfunction in the pipes.

Accordingly, there is a need to prevent malfunction by detecting a frequency at which vibration occurs.

JP 2004-003854 A discloses a control method of an air conditioner, comprising a vibration level determining means, wherein the rotation speed of a refrigerant compressor is continuously increased or decreased when the vibration level determining means detects large vibration.

### SUMMARY OF THE INVENTION

An aspect of the present invention is to provide an air conditioner that monitors the operating condition of a compressor and diagnoses malfunctioning of a compressor or fan or any malfunctioned part in them. Another aspect of the present invention is to provide an air conditioner that controls a compressor in order to prevent resonance by detecting the frequency of vibration caused during the compressor' s operation, and a method of controlling the same.

An exemplary embodiment of the present invention provides an air conditioner as defined by claim 1.

Another exemplary embodiment of the present invention provides a method of controlling an air conditioner as defined by claim 11.

With this configuration, the air conditioner and the method of controlling the same according to the present invention offer the advantage of preventing damage to the compressor and improving its operating efficiency by sensing vibration of the compressor during the air conditioner' s operation, detecting the frequency of the vibration to sense the presence of a malfunction in the compressor, and controlling the operating frequency of the compressor.

### BRIEF DESCRIPTION OF THE DRAWINGS

The accompanying drawings, which are- included to provide a further understanding of the invention and are incorporated in and constitute a part of this application, illustrate embodiment(s) of the invention and together with the description serve to explain the principle of the invention. In the drawings:
FIG. 1 is a view illustrating the configuration of an air conditioner according to the present invention;
FIG. 2 is a block diagram illustrating control parts of the air conditioner according to the present invention;
FIG. 3 is a view illustrating a compressor of the air conditioner according to the present invention;
FIG. 4 is a view illustrating the configuration of a vibration sensing part installed in a pipe of the air conditioner according to the present invention;
FIG. 5 is a view illustrating the displacement of the pipe and of the vibration sensing part, in the air conditioner according to the present invention;
FIG. 6 is a view illustrating a vibration detecting circuit of the air conditioner according to the present invention;
FIG. 7 is a graph illustrating the displacement of a pipe caused by vibration of the compressor and the resulting changes in electrical capacitance, in the air conditioner according to the present invention;
FIG. 8 is a flowchart illustrating a method of detecting vibrational components of the compressor of the air conditioner according to the present invention;
FIG. 9 is a view illustrating a method of controlling an air conditioner based on vibration amplitude according to the present invention;
FIG. 10 is a flowchart illustrating a method of resetting avoided frequencies to control the compressor based on vibration amplitude, in the air conditioner according to the present invention;
FIG. 11 is a view illustrating changes in frequency with temperature, in the air conditioner according to the present invention; and
FIG. 12 is a flowchart illustrating a method of updating avoided frequencies based on vibration amplitude, in the air conditioner according to the present invention.

### DETAILED DESCRIPTION OF THE PREFERRED EMBODIMENTS

Advantages and features of the present invention and methods of accomplishing the same will be apparent by referring to the embodiments described below in detail in connection with the accompanying drawings. However, the present invention is not limited to the embodiments disclosed below and may be implemented in various different forms. The embodiments are provided only for completing the disclosure of the present invention and for fully representing the scope of the present invention to those skilled in the art. Like reference numerals refer to like elements throughout the specification.

Hereinafter, an exemplary embodiment of the present invention will be described in detail with reference to the drawings.

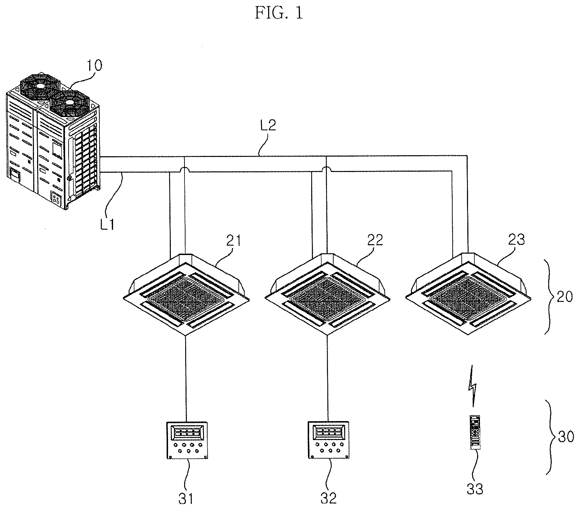

FIG. 1 is a view illustrating the configuration of an air conditioner according to the present invention.

Referring to FIG. 1, the air conditioner includes a plurality of indoor units 20 (21 to 23), at least one outdoor unit 10, and remote controls 30 (31 to 33) connected to the indoor units 20.

The air conditioner may further include a remote controller (not shown) that is connected to the indoor units 20 and the outdoor unit 10 and monitors and controls their operation.

The air conditioner may be categorized as a ceiling-mounted, floor-standing, or wall-mounted air conditioner, depending on the installation position. Also, the air conditioner may further include other units, such as a ventilation unit, an air freshener unit, a humidifying unit, dehumidification unit, and a heater, in addition to the outdoor unit 10 and the indoor units 20, but description of them will be omitted below.

The indoor unit 20 includes an expansion valve (not shown) for expanding the refrigerant supplied from the outdoor unit 10 connected by a refrigerant pipe LI, an indoor heat exchanger (not shown) for exchanging heat with the refrigerant, an indoor unit fan (not shown) for letting the indoor air into the indoor heat exchanger and exposing the heat-exchanged air to the room, a plurality of sensors (not shown), and a control means (not shown) for controlling the operation of the indoor unit 20.

The indoor unit 20 includes an exhaust opening (not shown) for exhausting the heat-exchanged air, and the exhaust opening is provided with an air direction control means (not shown) for opening or closing the exhaust opening and controlling the direction of the exhausted air. The indoor unit 20 controls intake air and exhausted air by controlling the rotation speed of the indoor unit fan, and also controls the amount of air. In some cases, the indoor unit 20 may further include a human body sensing means for detecting a human presence in an indoor space. Moreover, the indoor unit 20 may further include an output part for displaying the operating condition and settings of the indoor unit 20, and an input part for inputting settings data.

The outdoor unit 10 runs in cooling mode or heating mode, in response to a request from the indoor unit 20 connected to it by a communication line L2 or a control command from the remote controller, and supplies refrigerant to the indoor units 21 to 23.

The outdoor unit 10 includes at least one compressor (not shown) for compressing incoming refrigerant and discharging high-pressure gaseous refrigerant, an accumulator (not shown) for separating gaseous refrigerant and liquid refrigerant from each other to prevent unevaporated liquid refrigerant from entering the compressor, an oil separator (not shown) for recovering oil from the refrigerant discharged from the compressor, an outdoor heat exchanger (not shown) for condensing or evaporating refrigerant by heat exchange with outside air, an outdoor unit fan (not shown) for drawing air into the outdoor heat exchanger and blowing out the heat-exchanged air, in order to facilitate the heat exchange by the outdoor heat exchanger, a four-way valve (not shown) for changing the flow passage of the refrigerant depending on the operation mode of the outdoor unit 10, at least one pressure sensor (not shown) for measuring pressure, at least one temperature sensor (not shown) for measuring temperature, and control parts for controlling the operation of the outdoor unit 10 and communicating with other units. The outdoor unit 10 further includes a plurality of sensors, a valve, a supercooling device, etc., but description of them will be omitted below.

The remote control 30 is connected to the indoor unit 20 with wires or wirelessly to send or receive data, and allows the user to input operational settings, like operation mode, temperature, and amount of air, and operation schedules, and transmits them to the indoor unit 20 so that the indoor unit 20 runs according to the settings.

The remote controller (not shown) receives data from the indoor unit 20 and displays the operating condition of the indoor unit 20, and transmits the input data to the indoor unit 20 so that the indoor unit 20 runs according to predetermined settings.

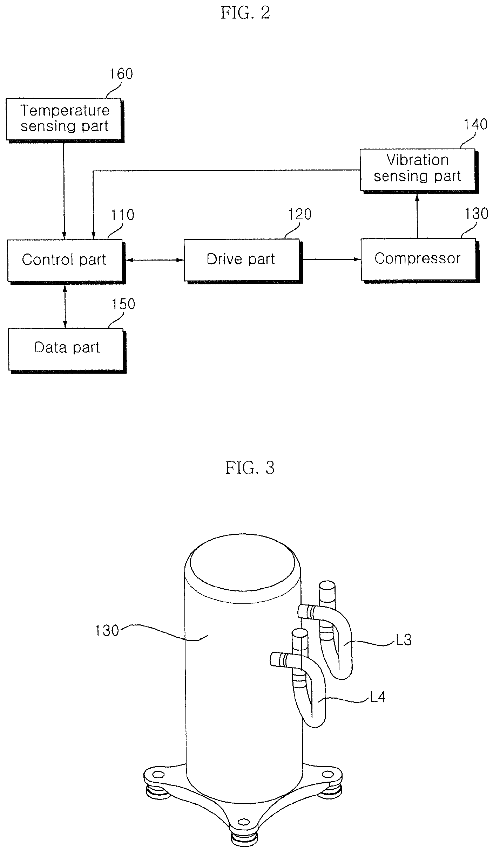

FIG. 2 is a block diagram illustrating control parts of the air conditioner according to the present invention.

Referring to FIG. 2, the outdoor unit 10 includes a data part 150, a drive part 120, a compressor 130, a vibration sensing part 140, a temperature sensing part 160, and a control part 110 that controls overall operation. Description of other parts of the outdoor unit 10 described previously will be omitted below.

The outdoor unit 10 may further include an input part (not shown) including a predetermined input means such as at least one button or switch. As the input means is operated, the input part sends commands on power input, address setting, test operation, etc. to the control part 110.

Also, the outdoor unit 10 may further include an output part (not shown) including a display means (not shown) for displaying information on the air conditioner' s operation settings, operating condition, and malfunction, a buzzer or speaker (not shown) for producing a predetermined sound effect or warning sound, and a lamp (not shown) that glows or blinks to indicate the connection status to each device or issue a warning. In this instance, the output part may issue a warning about a malfunction in the compressor in response to a control command from the control part 110, in at least one of the following forms: warning message, warning light, and warning sound.

Moreover, the outdoor unit 10 may further include a communication part (not shown) consisting of a plurality of wired or wireless communication modules. The communication part sends or receives data to or from a connected indoor unit 20 in response to a control command from the control part 110 to receive data about operation settings from the indoor unit 20. In some cases, the communication part may transmit an indication signal about a malfunction in the outdoor unit 10 so that the indoor unit 20 issues a warning.

The drive part 120 controls the operation of the compressor 130 in response to a control command from the control part 110. The drive part 120 supplies operating power to the compressor 130 to run the compressor 130, and allows the compressor 130 to run at a predetermined operating frequency in response to a control command from the control part 110.

In this instance, the drive part 120 may be provided with an outdoor unit fan drive part (not shown) or valve control part (not shown), in order to control the operation of the outdoor unit fan (not shown) or valve, as well as the operation of the compressor 130.

The data part 150 stores control data for outdoor unit operation, frequency data for control of the compressor 130, data detected during the outdoor unit operation, and data input or output through the communication part. Moreover, the data part 150 stores address data for sending or receiving data to or from the indoor unit 20 or external devices.

The outdoor unit 10 is provided with a plurality of sensing means that is installed inside or outside the outdoor unit 10, and detects and measures data about the outdoor unit 10 and data about its operating condition and sends it to the control part 110. For example, the sensing means may include sensors for measuring the temperature, pressure, humidity, carbon dioxide, airflow, voltage, and current inside and outside the outdoor unit 10.

The temperature sensing part 160 consists of a plurality of temperature sensors, and is installed inside or outside the outdoor unit 10 and measures the temperatures inside and outside the outdoor unit 10. In this instance, the temperature sensing part 160 may be installed at an intake port for drawing external air in, or outside the outdoor unit fan, to measure the outdoor temperature.

Moreover, the temperature sensing part 160 is installed in a refrigerant pipe to measure the intake and discharge temperatures and reports them to the control part 110.

The vibration sensing part 140 senses vibration of the compressor 130.

The vibration sensing part 140 is installed in the compressor 130 or in a pipe connected to the compressor 130 to sense vibration caused by the compressor 130' s operation. The vibration sensing part 140 detects the amplitude and frequency of vibration and reports them to the control part 110.

The control part 110 controls the air conditioner to perform a given operation based on operating settings or a request from the indoor unit 20, and controls the operation of the outdoor unit 10 and determines if the outdoor unit 10 operates normally, based on data input from different sensors. Also, the control part 110 processes input or output data and controls data transmission and reception through the communication part.

The control part 110 applies a control command to the drive part 120 so that the compressor 130 runs on operation settings received from the indoor unit 20. In this case, the control part 110 controls the operating frequency of the compressor 130.

Also, the control part 110 registers the compressor 130' s operating frequency according to a vibration sensed by the vibration sensing part 140 as an avoided frequency, and stores it in the data part 150.

When the vibration sensing part 140 senses a vibration, the control part 110 registers the compressor 130' s operating frequency at which the vibration has occurred as an avoided frequency, based on vibration amplitude. In particular, the control part 110 detects a frequency at which resonance occurs by analyzing the vibration sensed by the vibration sensing part 140 based on input data.

In this case, the control part 110 analyzes the amplitude and frequency of the vibration input from the vibration sensing part 140 to determine the resonant frequency of the compressor based on the vibration frequency. Accordingly, the control part 110 registers the compressor 130' s operating frequency at which resonance has occurred as an avoided frequency.

The control part 110 controls the compressor 130 to run at operating frequencies other than the registered avoided frequency. Accordingly, the outdoor unit 10 is controlled such that vibration, especially, resonance, does not occur due to the operation of the compressor 130.

In this instance, the control part 110 manages the avoided frequency by adding or deleting it based on data from the vibration sensing part 140 or from the temperature sensing part 160.

The control part 110 assesses the level of amplitude of the vibration sensed by the vibration sensing part 140, and manages the avoided frequency according to the level of amplitude of the vibration. The control part 110 resets existing avoided frequencies based on temperature changes since the resonant frequency varies with temperature.

For high-amplitude vibrations, the control part 110 performs emergency control of the compressor 130 if the amplitude is a certain level or higher, and if necessary, stops the operation of the compressor 130. During emergency control, the control part 110 transmits a warning or indication signal about emergency control to the indoor unit 20 to issue a warning or indication through the indoor unit 20.

FIG. 3 is a view illustrating a compressor of the air conditioner according to the present invention.

As illustrated in FIG. 3, the outdoor unit 10 is provided with a compressor 130. The outdoor unit 10 may be provided with one or more compressors depending on the amount of load connected to it.

The compressor 130 may be categorized, by type, as a constant-speed compressor or an inverter compressor. The constant-speed compressor may be turned on or off and run at a specified operating frequency, and the inverter compressor may run at varying operating frequencies. The following description will be given with an example in which the compressor 130 is an inverter compressor.

Refrigerant pipes L3 and L4 are connected to the compressor 130.

That is, an intake pipe for drawing refrigerant into the compressor 130 and a discharge pipe for discharging refrigerant from the compressor 130 are connected to the compressor 130. Also, an oil recovery unit (oil separator) and an accumulator may be connected to the compressor 130.

Accordingly, when a low-temperature, low-pressure gaseous refrigerant enters the compressor 130, the compressor 130 compresses the refrigerant and discharges a high-temperature, high-pressure refrigerant through the refrigerant pipes.

The vibration sensing part 140 will be described with an example in which it is installed in a refrigerant pipe connected to the compressor 130.

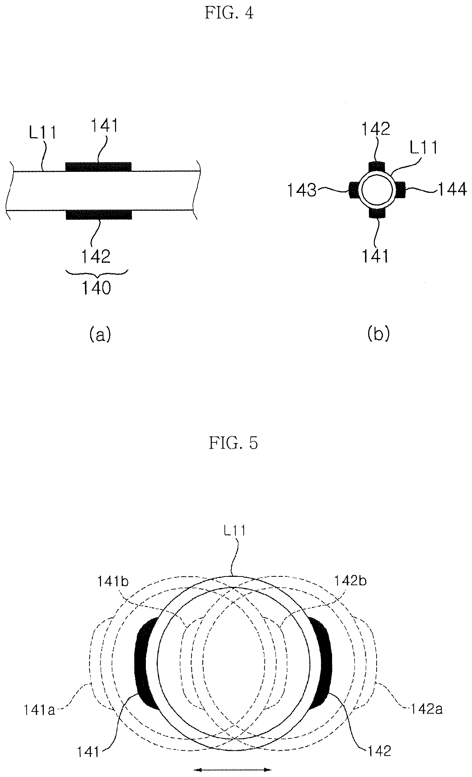

FIG. 4 is a view illustrating the configuration of a vibration sensing part installed in a pipe of the air conditioner according to the present invention. As illustrated in FIG. 4, the vibration sensing part 140 is installed in a refrigerant pipe L11 connected to the compressor 130.

As illustrated in (a) of FIG. 4, the vibration sensing part 140 is held tightly to the surface of the refrigerant pipe L11, and installed in a way that two sensors, i.e., a first sensor 141 and a second sensor 142, face each other. That is, the first sensor 141 and the second sensor 142 are placed at 180 degrees to each other with respect to a cross-section of the refrigerant pipe L11. In this instance, the first sensor 141 and the second sensor 142 may be used as electrodes for sensing vibration.

Assuming that there is a line extending between the first sensor 141 and the second sensor 142, the vibration sensing part 140 may detect the amplitude of vibration that occurs horizontally with respect to the line. Also, the vibration sensing part 140 senses vibration that is at a predetermined angle from where the first sensor 141 and the second sensor 142 are placed.

As illustrated in (b) of FIG, 4, the vibration sensing part 140 may have first to fourth sensors 141 to 144 installed in the refrigerant pipe L11. In this case, the first to fourth sensors 141 to 144 may be used as electrodes for sensing vibration.

The first to fourth sensors 141 to 144 are placed at 90 degrees to one another with respect to a cross-section of the refrigerant pipe L11.

Accordingly, the vibration sensing part 140 may sense vibration coming from various directions that is caused by the operation of the compressor 130.

FIG. 5 is a view illustrating the displacement of the pipe and of the vibration sensing part, in the air conditioner according to the present invention.

As illustrated in FIG. 5, when the compressor 130 runs at a particular operating frequency, a vibration may occur. In this instance, the vibration is transmitted to the refrigerant pipe connected to the compressor 130.

Accordingly, the refrigerant pipe vibrates with a certain amplitude, and hence the vibration sensing part 140 installed in the refrigerant pipe L11 detects the amplitude and frequency of the vibration.

If the refrigerant pipe 11 vibrates to the left and right, the positions of the first and second sensors 141 and 142 are moved, and the sensors are able to detect the amplitude and frequency of the vibration based on the displacement and displacement rate.

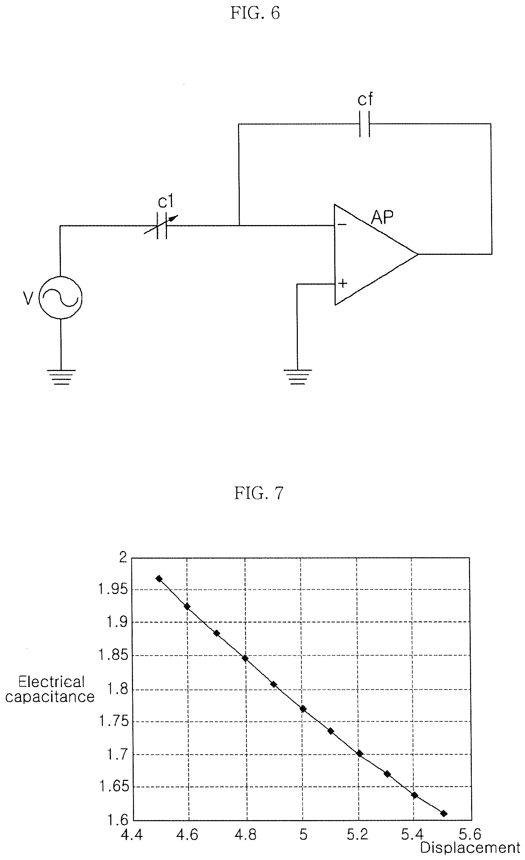

FIG. 6 is a view illustrating a vibration detecting circuit of the air conditioner according to the present invention.

As illustrated in FIG. 6, the vibration sensing part 40 includes a vibration detecting circuit to which the first and second sensors 141 and 142 acting as electrodes are connected.

Here, the vibration detecting circuit is a low-input impedance amplifier, which is a circuit that is used in MEMS and that estimates the electrical capacitance between the two electrodes, i.e., the first and second sensors 141 and 142 that are displaced due to vibration of the compressor. In this instance, the circuit' s capacitor C1 represents a capacitance that is formed depending on the inter-electrode distance between the first and second sensors 141 and 142.

If the compressor vibrates in a first direction, for example, on the X-axis, the refrigerant pipe also vibrates in the same direction.

In this instance, the distance between the first and second sensors 141 and 142 changes due to fast vibration, and hence the electrical capacitance of the capacitor C1 in the circuit varies.

When a voltage V is supplied, the capacitance of the capacitor C1 with the first and second sensors used as electrodes varies due to vibration. Then, the vibration is amplified by the amplifier AP and then detected.

FIG. 7 is a graph illustrating the displacement of a pipe caused by vibration of the compressor and the resulting changes in electrical capacitance, in the air conditioner according to the present invention.

By measuring changes in electrical capacitance caused by the displacement of the first and second sensors 141 and 142, the resulting vibration of the compressor 130 may be predicted.

As illustrated in the graph of FIG. 7, the electrical capacitance of the vibration detecting circuit varies with the displacement of the first and second sensors 141 and 142 of the vibration sensing part 140. FIG. 7 is a view illustrating results of prediction about vibration of the compressor based on measurement data.

In this case, vibration may be sensed in units as small as 5 *µ*m, which allows for precise measurement of vibration of the compressor 130.

The control part 110 may register the operating frequencies according to the frequency of vibration of the compressor 130 as an avoided frequency, based on vibration amplitude and frequency data input from the vibration sensing part 140.

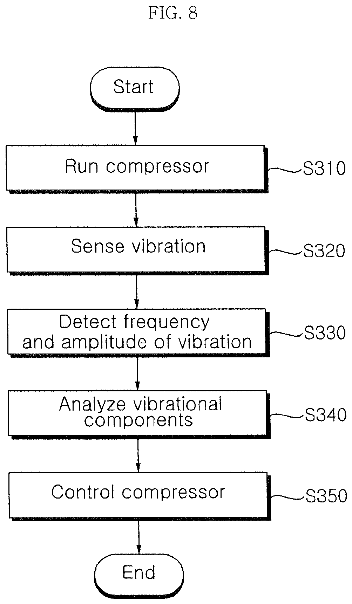

FIG. 8 is a flowchart illustrating a method of detecting vibrational components of the compressor of the air conditioner according to the present invention.

As illustrated in FIG. 8, when the air conditioner starts running according to operation settings, the compressor 130 runs on operating power supplied from the drive part 120 (S310). In this instance, the operating frequency of the compressor 130 is controlled by the control part 110.

The vibration sensing part 140 is installed in a refrigerant pipe and senses vibration of the compressor 130. In this instance, vibration is sensed due to the displacement of the vibration sensing part 140' s first and second sensors installed as electrodes in the refrigerant pipe.

The vibration sensing part 140 detects the amplitude and frequency of the sensed vibration (S330).

The control part 110 analyzes the components of the vibration based on vibration amplitude and frequency data input from the vibration sensing part 140 (S340). Accordingly, when a certain level of vibration or higher occurs, the control part 110 checks the operating frequency at which the vibration has occurred in the compressor 130, and registers this frequency as an avoided frequency.

The control part 110 controls the compressor 130 to run at operating frequencies other than the avoided frequency (S350).

Accordingly, the control part 110 stores data on the resonant frequency of the compressor through analysis of the vibration, and registers the corresponding operating frequency as an avoided frequency to prevent resonance.

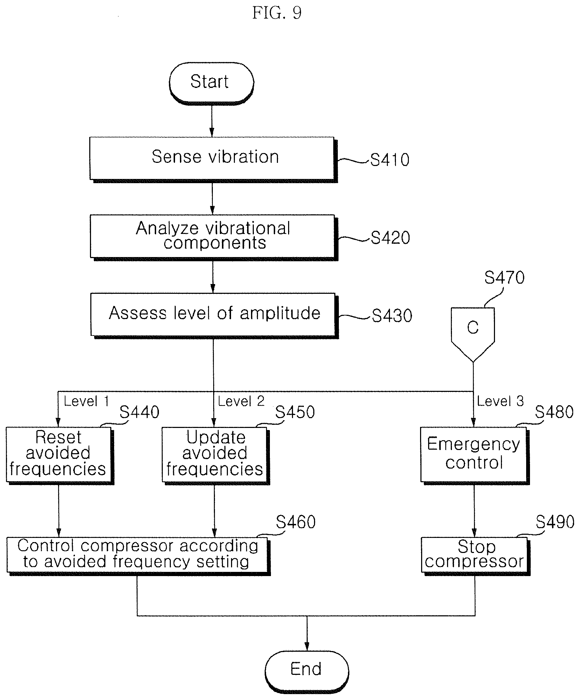

FIG. 9 is a view illustrating a method of controlling an air conditioner based on vibration amplitude according to the present invention.

As illustrated in FIG. 9, the air conditioner starts running according to operation settings. The control part 110 of the outdoor unit 10 controls the compressor 130 according to the operation settings. When a vibration occurs due to the compressor 130 operating at a particular operating frequency, the vibration sensing part 140 senses the vibration of the compressor 130.

In this instance, as explained previously, the vibration sensing part 140 sends vibration amplitude and frequency data to the control part 110, and the control part 110 analyzes the vibration based on the data input from the vibration sensing part 140 (S420). Accordingly, the control part 110 detects an avoided frequency.

The control part 110 assesses the level of amplitude of the sensed vibration (S430). The amplitude may be classified into Level 1 representing small amplitude, Level 2 representing large amplitude, and Level 3 representing abnormal operation, according to how large the amplitude is. While the control part 110 classifies amplitude into 3 levels, the reference level for amplitude assessment and the number of levels of amplitude may vary with settings.

For example, an amplitude of 2 to 3 mm may be assessed as Level 1, an amplitude of 3 to 5 mm may be assessed as Level 2, and an amplitude of 5 mm or greater may be assessed as Level 3.

If the amplitude is Level 1, the control part 110 resets existing stored avoided frequencies (S440). The existing avoided frequencies are reset according to an avoided frequency resetting method to be described later.

The control part 110 controls the compressor 130 according to the avoided frequency setting (S460).

If the amplitude is Level 2, the control part 110 updates the avoided frequencies (S450).

Based on the updated avoided frequencies, the control part 110 controls the compressor 130 to run at operating frequencies other than the avoided frequencies (S460).

If the amplitude is Level 3(C)(S470), the control part 110 performs emergency control because the vibration is stronger than the reference level (S480). In emergency control, the control part 110 registers the operating frequency corresponding the sensed vibration as an avoided frequency.

The control part 110 stops the compressor 130 while performing emergency control (S490), and temporarily stops the existing operation. The control part 110 issues a warning about emergency stop, and may stop the operation of the compressor or resume the operation after stopping it for a predetermined time.

Since resonance of Level 3 has occurred, the control part 110 registers the operating frequency as an avoided frequency before stopping the operation so that the same kind of vibration does not occur in the next operation.

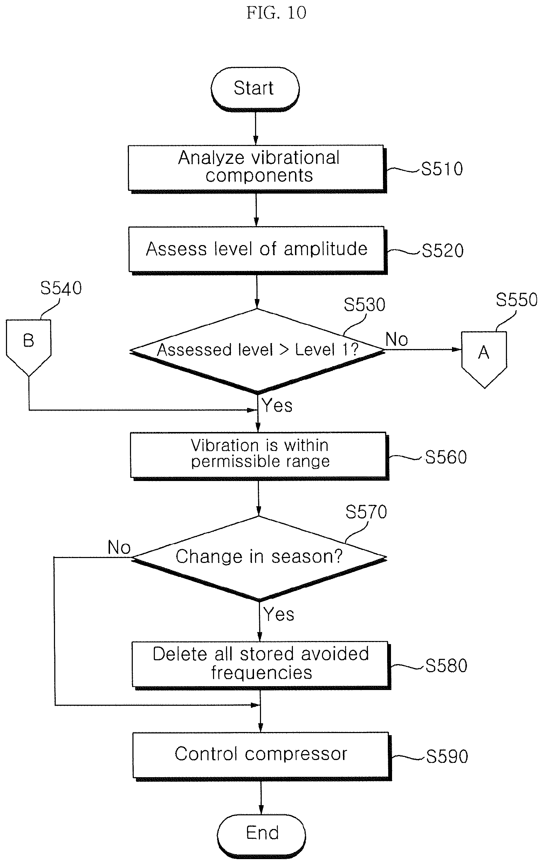

FIG. 10 is a flowchart illustrating a method of resetting avoided frequencies to control the compressor based on vibration amplitude, in the air conditioner according to the present invention.

As illustrated in FIG. 10, the control part 110 analyzes the components of vibration based on data input from the vibration sensing part 140 (S520), and assesses the level of amplitude (S520).

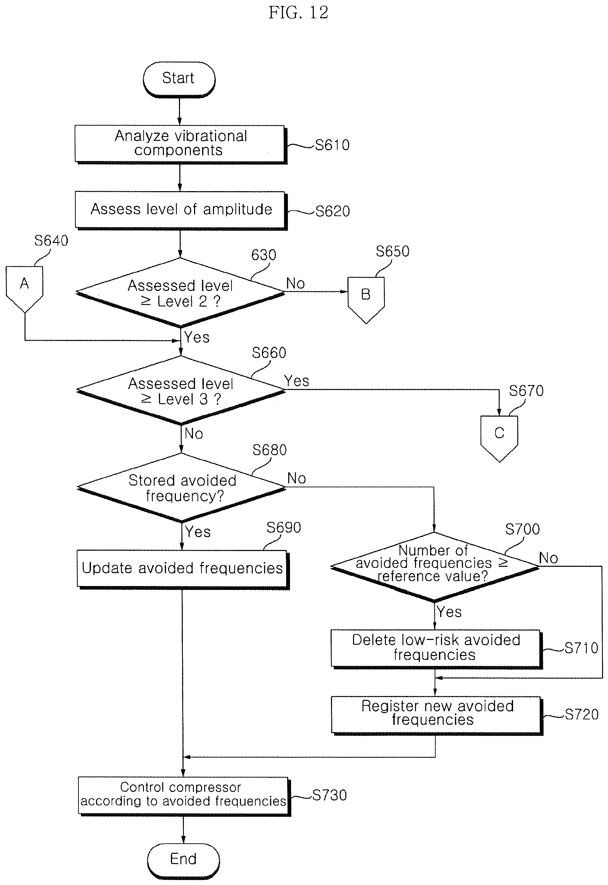

The assessed level is compared with Level 1 (S530). If the assessed level is Level 2 or Level 3, which is higher than Level 1 (A), the control part 110 updates the existing avoided frequencies or performs emergency control, as depicted in FIG. 12 to be described later (S550). If the assessed level is Level 1 (B) as explained later with reference to FIG. 12 (S540), the control part 110 operates as follows.

If the assessed level is Level 1, this means that the vibration has an amplitude of 2 to 3 mm, and the control part 110 determines that the vibration is within a permissible range (S560). In some cases, the control part 110 may register the operating frequency, when the vibration of Level 1 has occurred, as an avoided frequency, because of the fact that the vibration has occurred, although the vibration is within the permissible range.

The control part 110 receives input of measured outdoor temperatures from the temperature sensing part 160 and detects a change in season (S570).

The control part 110 detects a change in season based on outdoor temperatures. Specifically, the control part 110 may detect a change in season based on cumulative temperature data by any one of the following methods: measurement of the average temperature over a given period of time, measurement of temperature differences, and comparison with temperature data for the last year.

If a change in season is detected, the control part 110 resets all stored avoided frequencies by deleting them from the data part 150 (S580).

If there is no change in season, the stored avoided frequencies are maintained.

The control part 110 performs control of the compressor 130 based on the avoided frequencies (S590).

The reason for detecting a change in season will be described below.

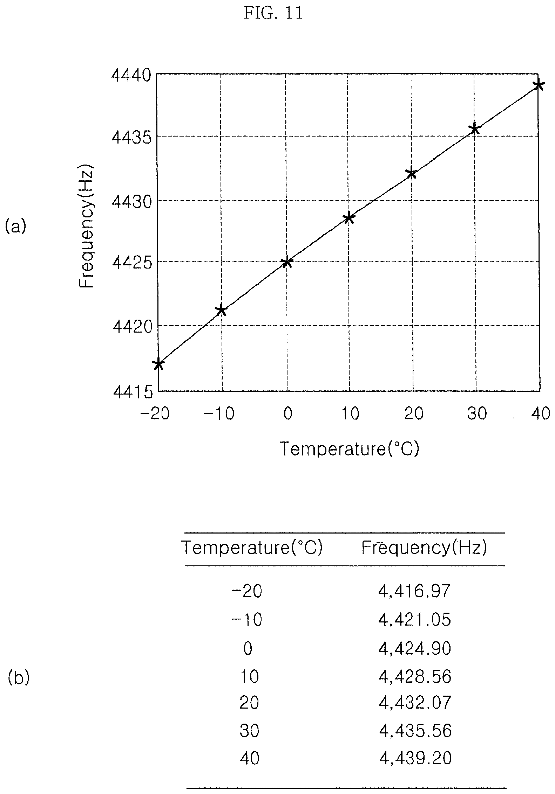

FIG. 11 is a view illustrating changes in frequency with temperature, in the air conditioner according to the present invention. As illustrated in FIG. 11, when there is a temperature change, the resonant frequency changes with this temperature change.

As illustrated in (a) of FIG. 11, it can be seen that, when the temperature rises above 0 °C, the resonant frequency of the compressor also increases.

The frequency values for different temperatures in the graph will be listed below in (b) of FIG. 11. (b) of FIG. 11 illustrates an example of changes in the resonant frequency of vibration of the compressor.

As illustrated in (b) of FIG. 11, it can be seen that the compressor' s resonant frequency was 4416.97 Hz at -20 °C, 4424.90 Hz at 0 °C, and as high as 4432.07 Hz at 20 °C.

Consequently, it can be seen that, as resonant frequency changes with seasons, the resonant frequency of vibration of the compressor 130 varies with seasons.

For low-amplitude vibrations, i.e., Level 1 vibrations, the control part 110 determines that the vibration is within a permissible range. By the way, as explained above, the resonant frequency changes with seasons because a temperature change or season change affects the resonant frequency. Thus, the control part 110 detects a change in season based on temperatures, and resets all existing avoided frequencies by deleting them.

For example, it is assumed that there are stored avoided frequencies registered for the summer season and the air conditioner is going to be run for the winter season. In this case, the avoided frequencies registered for the summer season are not consistent with resonance frequencies for the winter season, so the control part 110 resets all the stored avoided frequencies and registers new avoided frequencies. In some cases, the control part 110 may delete all but the most recent avoided frequencies that have been registered during a predetermined period after a certain point in time.

FIG. 12 is a flowchart illustrating a method of updating avoided frequencies based on vibration amplitude, in the air conditioner according to the present invention.

As illustrated in FIG. 12, the control part 110 analyzes the components of vibration based on data input from the vibration sensing part 140 (S610). The control part 110 assesses the level of amplitude of the sensed vibration (S620). For example, the amplitude may be classified into Level 1, Level 2, and Level 3, according to how large the amplitude is, and the reference amplitude level and the number of levels of amplitude may vary with settings

The control part 110 determines whether or not the assessed level is Level 2 or above (S630). If the assessed level is below Level 2 (B), existing avoided frequencies are reset according to Level 1, as explained previously with reference to FIG. 10 (S650).

If the assessed level is Level 2 or above, the control part 110 determines whether or not the assessed level is Level 3 or above (S660). If the assessed level is Level 3 or above (C), emergency control is performed according to Level 3, as explained previously with reference to FIG. 9 (S670). If the assessed level is Level 2 (A) (S640) as explained previously with reference to FIG. 10, the control part 110 operates as follows.

If the amplitude of the vibration of the compressor 130 is Level 2, the control part 110 analyzes the resonant frequency of the vibration to determine whether the operating frequency corresponding the resonant frequency is a stored avoided frequency (S680). The control part 110 searches for the operating frequency among the avoided frequencies stored in the data part 150 to determine whether the operating frequency is a stored avoided frequency.

If the operating frequency corresponding the vibration is a stored avoided frequency, the control part 110 updates the stored avoided frequencies (S690).

For example, if the operating frequency corresponding the vibration is an avoided frequency stored in the data part 150 but of a different level, the control part 110 may update it to Level 2. Also, the control part 110 may set and update the frequency of occurrence of this avoided frequency.

If the operating frequency is not a stored avoided frequency, the control part 110 determines whether the number of stored avoided frequencies is no less than a reference value (S700).

If the number of stored avoided frequencies is no less than the reference value, the control part 110 deletes low-risk avoided frequencies among the stored avoided frequencies(S710), and registers new avoided frequencies (S720).

In this instance, the control part 110 may determine the level of risk for a multiplicity of registered avoided frequencies based on vibration amplitude, i.e., the level of amplitude, and delete low-risk avoided frequencies for low-amplitude vibrations. Also, the control part 110 may assess low-frequency avoided frequencies as low-risk avoided frequencies.

If the number of stored avoided frequencies is below the reference value, the control part 110 registers new additional avoided frequencies (S720).

As explained above, once the stored avoided frequencies are updated, or the existing avoided frequencies are deleted and new avoided frequencies are added, the control part 110 performs control of the compressor 130 based on the updated or added avoided frequencies, so that the compressor 130 runs at operating frequencies other than the avoided frequencies (S730).

Accordingly, according to the present invention, when a vibration occurs in the compressor 130, the resonant frequency of the compressor can be checked by analyzing the components of the vibration, and the operating frequency corresponding the resonant frequency can be registered as an avoided frequency to control the operation of the compressor 130. As a consequence, vibration of the compressor can be prevented, and this can improve the operating efficiency of the compressor and prevent damage to the compressor.

Although all the elements of the embodiment of the present invention have been described as being held together and operating as a single unit, the present invention is not necessarily limited to this embodiment. Rather, in some embodiments, all the elements may be selectively held together and operate as more than a single unit within the scope of the present invention.

It should be understood that the foregoing disclosure is merely illustrative of the technical ideal of the present invention. One skilled in the art will recognize that many modifications and variations are possible without departing from the scope of the invention as defined in the appended claims.

## Claims

1. An air conditioner, which comprises an outdoor unit (10) and a plurality of indoor units (20; 21-23) connected to the outdoor unit (10), and which runs a cooling or heating operation,
the air conditioner comprising:
a compressor(130) for compressing refrigerant;
a refrigerant pipe (L3, L4) connected to the compressor (130);
a temperature sensing part (160) for measuring outdoor temperatures;
a vibration sensing part (140) installed in the refrigerant pipe (L3,L4) and for sensing vibration; and
a control part (110) that, when a vibration is sensed by the vibration sensing part (140), analyzes the vibration of the compressor (130) based on data input from the vibration sensing part (140) and registers operating frequency corresponding the vibration as an avoided frequency, and that controls the compressor (130) to run at operating frequencies other than the avoided frequency,
wherein the control part (110) detects a change in season based on measured outdoor temperatures from the temperature sensing part (160), and resets existing avoided frequencies by deleting the same if a change in season is detected, and maintains the existing avoided frequencies if a change in season is not detected.

2. The air conditioner of claim 1, wherein the vibration sensing part (140) comprises at least two sensors installed in the refrigerant pipe (L3, L4), and senses vibration based on the displacement of the sensors.

3. The air conditioner of claim 2, wherein the vibration sensing part (140) comprises first and second sensors,
wherein the first and second sensors are placed at 180 degrees to each other with respect to the refrigerant pipe (L3, L4).

4. The air conditioner of claim 3, wherein the vibration sensing part (140) further comprises third and fourth sensors,
wherein the third and fourth sensors are placed at 180 degrees to each other with respect to the refrigerant pipe (L3, L4), and placed at 90 degrees to the first and second sensors.

5. The air conditioner of any one of claims 1 to 4, wherein the vibration sensing part (140) comprises at least two electrodes installed in the refrigerant pipe (L3, L4), and the electrodes act as a capacitor, along the refrigerant pipe (L3, L4).

6. The air conditioner of any one of claims 1 to 5, wherein the control part (110) analyzes the amplitude and frequency of the vibration to determine the resonant frequency of the compressor (130) based on the vibration frequency.

7. The air conditioner of any one of claims 1 to 6, wherein the control part (110) assesses the level of amplitude of the vibration sensed by the vibration sensing part (140), and manages the avoided frequency according to the level of amplitude.

8. The air conditioner of claim 7, wherein, if the amplitude is Level 1, the control part (110) resets existing avoided frequencies for the vibration, if the amplitude is Level 2, the control part (110) adds new avoided frequencies for the vibration, and if the amplitude is Level 3, the control part (110) registers the operating frequency corresponding the vibration as an avoided frequency and stops the compressor (130) by performing emergency control.

9. The air conditioner of claim 8, wherein the control part (110) assesses an amplitude of 2 to 3 mm as the Level 1, an amplitude of 3 to 5 mm as the Level 2, and an amplitude of 5 mm or greater as the Level 3.

10. The air conditioner of any one of claims 1 to 9, wherein, if the number of stored avoided frequencies is no less than a reference value, the control part (110) deletes low-risk avoided frequencies and registers new avoided frequencies.

11. A method of controlling an air conditioner,
sensing a vibration of a compressor (130) during operation by a vibration sensing part (140);
analyzing the vibration based on data input from the vibration sensing part (140) and assessing the level of amplitude of the vibration;
registering operating frequency corresponding the vibration as an avoided frequency according to the level of amplitude; and
controlling the compressor (130) to run at operating frequencies other than the avoided frequency,
detecting a change in season based on measured outdoor temperatures from a temperature sensing part (160); and
resetting the existing avoided frequencies by deleting the same if a change in season is detected, and maintaining the existing avoided frequencies if a change in season is not detected.

12. The method of claim 11, further comprising, if the amplitude of the vibration is a certain level or above, stopping the compressor (130) by performing emergency control.

13. The method of claim 12, further comprising:
if the amplitude is Level 1, resetting existing avoided frequencies for the vibration;
if the amplitude is Level 2, adding new avoided frequencies for the vibration, and
if the amplitude is Level 3, registering the operating frequency corresponding the vibration as an avoided frequency and stopping the compressor (130) by performing emergency control.

14. The method of any one of claims 11 to 13, further comprising, deleting low-risk avoided frequencies and registering new avoided frequencies, when the number of stored avoided frequencies is no less than a reference value.

## Patentansprüche

1. Klimaanlage, die eine Außeneinheit (10) und mehrere Inneneinheiten (20; 21-23) aufweist, die mit der Außeneinheit (10) verbunden sind, und die in einem Kühl- oder Heizbetrieb arbeitet,
wobei die Klimaanlage aufweist:
einen Verdichter (130) zum Verdichten eines Kältemittels;
eine Kältemittelleitung (L3, L4), die mit dem Verdichter (130) verbunden ist;
einen Temperaturerfassungsteil (160) zum Messen von Außentemperaturen;
einen Schwingungserfassungsteil (140), der in der Kältemittelleitung (L3, L4) installiert ist, um eine Schwingung zu erfassen; und
einen Steuerteil (110), der, wenn eine Schwingung durch den Schwingungserfassungsteil (140) erfasst wird, die Schwingung des Verdichters (130) beruhend auf Daten analysiert, die vom Schwingungserfassungsteil (140) eingegeben werden, und eine Betriebsfrequenz, die der Schwingung entspricht, als eine Vermeidungsfrequenz registriert, und
der den Verdichter (130) steuert, auf anderen Betriebsfrequenzen als die Vermeidungsfrequenz zu arbeiten,
wobei der Steuerteil (110) einen Wechsel der Jahreszeit beruhend auf den vom Temperaturerfassungsteil (160) gemessenen Außentemperaturen erfasst, und vorhandene Vermeidungsfrequenzen durch deren Löschung zurücksetzt, wenn ein Wechsel der Jahreszeit erfasst wird, und die vorhandenen Vermeidungsfrequenzen beibehält, wenn kein Wechsel der Jahreszeit erfasst wird.

2. Klimaanlage nach Anspruch 1, wobei der Schwingungserfassungsteil (140) mindestens zwei Sensoren aufweist, die in der Kältemittelleitung (L3, L4) installiert sind, und eine Schwingung beruhend auf der Verschiebung der Sensoren erfasst.

3. Klimaanlage nach Anspruch 2, wobei der Schwingungserfassungsteil (140) einen ersten und zweiten Sensor aufweist,
wobei der erste und zweite Sensor in Bezug auf die Kältemittelleitung (L3, L4) unter 180 Grad zueinander angeordnet sind.

4. Klimaanlage nach Anspruch 3, wobei der Schwingungserfassungsteil (140) ferner einen dritten und vierten Sensor aufweist,
wobei der dritte und vierte Sensor in Bezug auf die Kältemittelleitung (L3, L4) unter 180 Grad zueinander angeordnet sind und unter 90 Grad zu dem ersten und zweiten Sensor angeordnet sind.

5. Klimaanlage nach einem der Ansprüche 1 bis 4, wobei der Schwingungserfassungsteil (140) mindestens zwei Elektroden aufweist, die in der Kältemittelleitung (L3, L4) installiert sind, und die Elektroden längs der Kältemittelleitung (L3, L4) als ein Kondensator arbeiten.

6. Klimaanlage nach einem der Ansprüche 1 bis 5, wobei der Steuerteil (110) die Amplitude und Frequenz der Schwingung analysiert, um die Resonanzfrequenz des Verdichters (130) beruhend auf der Schwingungsfrequenz zu bestimmen.

7. Klimaanlage nach einem der Ansprüche 1 bis 6, wobei der Steuerteil (110) den Pegel der Amplitude der durch den Schwingungserfassungsteil (140) erfassten Schwingung feststellt und die Vermeidungsfrequenz gemäß dem Pegel der Amplitude verwaltet.

8. Klimaanlage nach Anspruch 7, wobei, wenn die Amplitude einen Pegel 1 aufweist, der Steuerteil (110) vorhandene Vermeidungsfrequenzen für die Schwingung zurücksetzt, wenn die Amplitude einen Pegel 2 aufweist, der Steuerteil (110) neue Vermeidungsfrequenzen für die Schwingung hinzufügt, und wenn die Amplitude einen Pegel 3 aufweist, der Steuerteil (110) die Betriebsfrequenz, die der Schwingung entspricht, als eine Vermeidungsfrequenz registriert und den Verdichter (130) durch Durchführen einer Notsteuerung stoppt.

9. Klimaanlage nach Anspruch 8, wobei der Steuerteil (110) eine Amplitude von 2 bis 3 mm als den Pegel 1, eine Amplitude von 3 bis 5 mm als den Pegel 2 und eine Amplitude von 5 mm oder mehr als den Pegel 3 feststellt.

10. Klimaanlage nach einem der Ansprüche 1 bis 9, wobei, wenn die Anzahl gespeicherter Vermeidungsfrequenzen nicht kleiner als ein Referenzwert ist, der Steuerteil (110) Vermeidungsfrequenzen mit niedrigem Risiko löscht und neue Vermeidungsfrequenzen registriert.

11. Verfahren zum Steuern einer Klimaanlage, das aufweist:
Erfassen einer Schwingung eines Verdichters (130) während des Betriebs durch einen Schwingungserfassungsteil (140);
Analysieren der Schwingungen beruhend auf Daten, die vom Schwingungserfassungsteil (140) eingegeben werden, und Feststellen des Pegels der Amplitude der Schwingung;
Registrieren einer Betriebsfrequenz, die der Schwingung entspricht, als eine Vermeidungsfrequenz gemäß dem Pegel der Amplitude; und
Steuern des Verdichters (130), um auf anderen Betriebsfrequenzen als die Vermeidungsfrequenz zu arbeiten,
Erfassen eines Wechsels der Jahreszeit beruhend auf von einem Temperaturerfassungsteil (160) gemessenen Außentemperaturen; und
Zurücksetzen der vorhandenen Vermeidungsfrequenzen durch deren Löschung, wenn ein Wechsel der Jahreszeit erfasst wird, und Beibehalten der vorhandenen Vermeidungsfrequenzen, wenn kein Wechsel der Jahreszeit erfasst wird.

12. Verfahren nach Anspruch 11, das, wenn sich die Amplitude der Schwingung auf einem bestimmten Pegel oder darüber befindet, ferner das Stoppen des Verdichters (130) durch Durchführen einer Notsteuerung aufweist.

13. Verfahren nach Anspruch 12, das ferner aufweist:
wenn die Amplitude einen Pegel 1 aufweist, Zurücksetzen vorhandener Vermeidungsfrequenzen für die Schwingungen;
wenn die Amplitude einen Pegel 2 aufweist, Hinzufügen neuer Vermeidungsfrequenzen für die Schwingungen, und
wenn die Amplitude einen Pegel 3 aufweist, Registrieren der Betriebsfrequenz, die der Schwingung entspricht, als eine Vermeidungsfrequenz und Stoppen des Verdichters (130) durch Durchführen einer Notsteuerung.

14. Verfahren nach einem der Ansprüche 11 bis 13, das ferner das Löschen von Vermeidungsfrequenzen mit niedrigem Risiko und das Registrieren neuer Vermeidungsfrequenzen aufweist, wenn die Anzahl gespeicherter Vermeidungsfrequenzen nicht kleiner als ein Referenzwert ist.

## Revendications

1. Climatiseur, comprenant une unité extérieure (10) et une pluralité d'unités intérieures (20 ; 21-23) reliées à l'unité extérieure (10), et exécutant un fonctionnement de refroidissement ou de chauffage,
ledit climatiseur comprenant :
un compresseur (130) destiné à comprimer un réfrigérant ;
une conduite de réfrigérant (L3, L4) raccordée au compresseur (130) ;
une unité de détection de température (160) destinée à mesurer des températures extérieures ;
une unité de détection de vibration (140) installée dans la conduite de réfrigérant (L3, L4) et destinée à détecter une vibration ; et
une unité de commande (110) qui, lorsqu'une vibration est détectée par l'unité de détection de vibration (140), analyse la vibration du compresseur (130) sur la base de données provenant de l'unité de détection de vibration (140) et enregistre une fréquence de fonctionnement correspondant à la vibration en tant que fréquence à éviter, et qui commande le fonctionnement du compresseur (130) à des fréquences de fonctionnement autres que la fréquence à éviter,
où l'unité de commande (110) détecte un changement de saison sur la base de températures extérieures mesurées par l'unité de détection de température (160), et réinitialise les fréquences à éviter existantes en supprimant celles-ci si un changement de saison est détecté, et maintient les fréquences à éviter existantes si un changement de saison n'est pas détecté.

2. Climatiseur selon la revendication 1, où l'unité de détection de vibration (140) comprend au moins deux capteurs installés dans la conduite de réfrigérant (L3, L4), et détecte une vibration sur la base du déplacement des capteurs.

3. Climatiseur selon la revendication 2, où l'unité de détection de vibration (140) comprend un premier et un deuxième capteurs,
où le premier et le deuxième capteurs sont disposés à 180° l'un de l'autre par rapport à la conduite de réfrigérant (L3, L4).

4. Climatiseur selon la revendication 3, où l'unité de détection de vibration (140) comprend en outre un troisième et un quatrième capteurs,
où le troisième et le quatrième capteurs sont disposés à 180° l'un de l'autre par rapport à la conduite de réfrigérant (L3, L4), et disposés à 90° du premier et du deuxième capteurs.

5. Climatiseur selon l'une des revendications 1 à 4, où l'unité de détection de vibration (140) comprend au moins deux électrodes installées dans la conduite de réfrigérant (L3, L4), et où les électrodes fonctionnent comme un condensateur le long de la conduite de réfrigérant (L3, L4).

6. Climatiseur selon l'une des revendications 1 à 5, où l'unité de commande (110) analyse l'amplitude et la fréquence de la vibration pour déterminer la fréquence de résonance du compresseur (130) sur la base de la fréquence de vibration.

7. Climatiseur selon l'une des revendications 1 à 6, où l'unité de commande (110) évalue le niveau d'amplitude de la vibration détectée par l'unité de détection de vibration (140), et gère la fréquence à éviter en fonction du niveau d'amplitude.

8. Climatiseur selon la revendication 7, où, si l'amplitude est de niveau 1, l'unité de commande (110) réinitialise les fréquences à éviter existantes pour la vibration, si l'amplitude est de niveau 2, l'unité de commande (110) ajoute de nouvelles fréquences à éviter pour la vibration, et si l'amplitude est de niveau 3, l'unité de commande (110) enregistre la fréquence de fonctionnement correspondant à la vibration en tant que fréquence à éviter et arrête le compresseur (130) en appliquant une commande d'urgence.

9. Climatiseur selon la revendication 8, où l'unité de commande (110) évalue une amplitude de 2 à 3 mm en tant que niveau 1, une amplitude de 3 à 5 mm en tant que niveau 2, et une amplitude égale ou supérieure à 5 mm en tant que niveau 3.

10. Climatiseur selon l'une des revendications 1 à 9, où, si le nombre de fréquences à éviter mémorisées n'est pas inférieur à une valeur de référence, l'unité de commande (110) supprime des fréquences à éviter à faible risque et enregistre de nouvelles fréquences à éviter.

11. Procédé de commande d'un climatiseur,
détectant une vibration d'un compresseur (130) en cours de fonctionnement au moyen d'une unité de détection de vibration (140) ;
analysant la vibration sur la base de données provenant de l'unité de détection de vibration (140) et évaluant le niveau d'amplitude de la vibration :
enregistrant une fréquence de fonctionnement correspondant à la vibration en tant que fréquence à éviter en fonction du niveau d'amplitude ; et
commandant le fonctionnement du compresseur (130) à des fréquences de fonctionnement autres que la fréquence à éviter,
détectant un changement de saison sur la base de températures extérieures mesurées par une unité de détection de température (160) ; et
réinitialisant les fréquences à éviter existantes en supprimant celles-ci si un changement de saison est détecté, et maintenant les fréquences à éviter existantes si un changement de saison n'est pas détecté.

12. Procédé selon la revendication 11, comprenant en outre, si l'amplitude de la vibration est égale ou supérieure à un certain niveau, l'arrêt du compresseur (130) par application d'une commande d'urgence.

13. Procédé selon la revendication 12, comprenant en outre :
si l'amplitude est de niveau 1, la réinitialisation de fréquences à éviter existantes pour la vibration ;
si l'amplitude est de niveau 2, l'ajout de nouvelles fréquences à éviter pour la vibration, et
si l'amplitude est de niveau 3, l'enregistrement de la fréquence de fonctionnement correspondant à la vibration en tant que fréquence à éviter et l'arrêt du compresseur (130) par application d'une commande d'urgence.

14. Procédé selon l'une des revendications 11 à 13, comprenant en outre la suppression de fréquences à éviter à faible risque et l'enregistrement de nouvelles fréquences à éviter, si le nombre de fréquences à éviter mémorisées n'est pas inférieur à une valeur de référence.
